# EUROPÄISCHE PATENTSCHRIFT

(11) **EP 4 248 079 B1**
(45) Veröffentlichungstag und Bekanntmachung des Hinweises auf die Patenterteilung: **25.12.2024**
(21) Anmeldenummer: 21805471.6
(22) Anmeldetag: 02.11.2021
(51) Int. Cl.: F02P 5/04, F02B 23/10, F02P 15/08, F02D 41/40, F02P 15/02, F02B 19/12, F02P 15/00, F02B 75/12, F02D 41/38, F02B 23/08

(54) **VERBRENNUNGSKRAFTMASCHINE MIT WENIGSTENS EINEM MIT EINER VORKAMMER, EINEM INJEKTOR UND ZWEI ZÜNDKERZEN AUSGESTATTETEN ZYLINDER SOWIE BETRIEBSVERFAHREN DAVON**
COMBUSTION ENGINE WITH AT LEAST A CYLINDER PROVIDED WITH A PRECHAMBER, AN INJECTOR AND TWO SPARK PLUGS AND THE OPERATING METHOD THEREOF
MOTEUR À COMBUSTION AVEC AU MOINS UN CYLINDRE POURVU D'UNE PRÉCHAMBRE, D'UN INJECTEUR ET DE DEUX BOUGIES D'ALLUMAGE ET SA MÉTHODE DE FONCTIONNEMENT

(30) Priorität: 23.11.2020 DE 102020130836
(43) Veröffentlichungstag der Anmeldung: 27.09.2023
(73) Patentinhaber: Bayerische Motoren Werke Aktiengesellschaft, 80809 München (DE)
(72) Erfinder: RUBBERT, Stephan, 85757 Karlsfeld (DE); NEUMANN, Juergen, 83626 Valley (DE); POESCHL, Marcus, 85293 Reichertshausen (DE)
(86) Internationale Anmeldenummer: PCT/EP2021/080345
(87) Internationale Veröffentlichungsnummer: WO 2022/106189

(56) Entgegenhaltungen:
- EP-A1- 3 561 255
- EP-A1- 3 855 008
- EP-A1- 4 124 742
- WO-A1-2019/125430
- DE-A1- 102005 037 551
- DE-A1- 102019 002 476
- DE-A1- 102020 110 960
- US-A1- 2019 360 385

## Beschreibung

Die Erfindung betrifft eine Verbrennungskraftmaschine gemäß dem Oberbegriff des Patentanspruchs 1. Des Weiteren betrifft die Erfindung ein Verfahren zum Betreiben einer solchen Verbrennungskraftmaschine.

Die US 2019/0323415 A1 offenbart einen Verbrennungsmotor mit mindestens einem Zylinder, durch welchen ein Brennraum teilweise begrenzt ist. Es ist eine Vorkammer vorgesehen, die über Durchgangsöffnungen, die in einer Wandung ausgebildet sind, fluidisch mit dem Brennraum verbunden und ansonsten von dem Brennraum getrennt ist. Mittels einer ersten Zündkerze können in der Vorkammer Zündfunken erzeugt werden, und mittels einer zweiten Zündkerze können in dem Brennraum außerhalb der Zündkammer Zündfunken erzeugt werden. Außerdem offenbart die CN 101037969 B beziehungsweise die US 7 740 009 B2 ein System zum Betreiben einer Zündung eines Motors. Die US 2019/0360385 A1 offenbart einen Verbrennungszylinder für einen Verbrennungsmotor gemäß dem Oberbegriff des Anspruchs 1.

Die EP 3 561 255 A1 offenbart einen Verbrennungsmotor. Die WO 2019/125430 A1 offenbart ein Verfahren zum Betreiben eines Verbrennungsmotors. Aufgabe der vorliegenden Erfindung ist es, eine Verbrennungskraftmaschine sowie ein Verfahren zum Betreiben einer solchen Verbrennungskraftmaschine zu schaffen, sodass ein besonders vorteilhafter Betrieb der Verbrennungskraftmaschine realisiert werden kann.

Diese Aufgabe wird erfindungsgemäß durch eine Verbrennungskraftmaschine mit den Merkmalen des Patentanspruchs 1 sowie durch ein Verfahren mit den Merkmalen des Patentanspruchs 9 gelöst. Vorteilhafte Ausgestaltungen der Erfindung sind Gegenstand der abhängigen Ansprüche.

Ein erster Aspekt der Erfindung betrifft eine als Hubkolbenmotor beziehungsweise Hubkolbenmaschine ausgebildete und auch als Verbrennungsmotor bezeichnete Verbrennungskraftmaschine. Die Verbrennungskraftmaschine wird auch als Verbrennungsmotor bezeichnet und kann für ein Kraftfahrzeug, insbesondere für einen Kraftwagen verwendet werden. Die Verbrennungskraftmaschine könnte jedoch auch für jedwede andere Anwendungen und dabei beispielsweise als ein Stationärmotor oder als ein Schiffsmotor oder als ein anderer Motor verwendet werden. Die Verbrennungskraftmaschine kann mittels flüssigem Kraftstoff betrieben werden, oder die Verbrennungskraftmaschine ist ein Gasmotor, welcher mittels eines gasförmigen Kraftstoffes betreibbar ist. Bezogen auf das Kraftfahrzeug ist es denkbar, dass das Kraftfahrzeug in seinem vollständig hergestellten Zustand die Verbrennungskraftmaschine aufweist und mittels der Verbrennungskraftmaschine verbrennungsmotorisch angetrieben werden kann. Die Verbrennungskraftmaschine weist wenigstens einen teilweise durch einen Zylinder begrenzten Brennraum auf. Beispielsweise ist in dem Zylinder ein Kolben translatorisch bewegbar aufgenommen, wobei der Brennraum teilweise durch den Zylinder und teilweise durch den Kolben begrenzt ist. Die Verbrennungskraftmaschine umfasst außerdem einen dem Brennraum zugeordneten Injektor, mittels welchem ein, insbesondere flüssiger, Kraftstoff direkt in den Brennraum einspritzbar ist. Durch das direkte Einspritzen des Kraftstoffes in den Brennraum ist in dem Brennraum ein einfach auch als Gemisch bezeichnetes Kraftstoff-Luft-Gemisch erzeugbar beziehungsweise aufnehmbar, wobei das Gemisch den mittels des Injektors direkt in den Brennraum eingespritzten Kraftstoff und Luft umfasst, welche in den Brennraum eingeleitet wird beziehungsweise wurde. Es ist denkbar, dass die Verbrennungskraftmaschine eine Saugrohreinspritzung umfasst, die mit der Direkteinspritzung kombiniert ist. Bei der Saugrohreinspritzung wird der Kraftstoff in einen auch als Einlasstrakt bezeichneten Ansaugtrakt der Verbrennungskraftmaschine und somit stromauf des Brennraums in die den Ansaugtrakt durchströmende Luft eingespritzt.

Die Verbrennungskraftmaschine weist außerdem eine dem Brennraum zugeordnete Vorkammer auf, welche bis auf wenigstens eine Durchgangsöffnung, insbesondere bis auf mehrere Durchgangsöffnungen, fluidisch von dem Brennraum getrennt und über die wenigstens eine Durchgangsöffnung beziehungsweise über die mehreren Durchgangsöffnungen fluidisch mit dem Brennraum verbunden ist. Hierunter ist insbesondere folgendes zu verstehen: Die Vorkammer, insbesondere deren Volumen, ist zumindest teilweise, insbesondere zumindest überwiegend oder vollständig, durch ein beispielsweise einstückiges oder mehrteiliges beziehungsweise mehrstückiges Kammerelement, insbesondere durch eine beispielsweise einstückige Wandung, begrenzt, wobei die wenigstens eine Durchgangsöffnung beziehungsweise die mehreren Durchgangsöffnungen in dem Kammerelement ausgebildet sind und das Kammerelement durchdringen, sodass die Vorkammer über die wenigstens eine Durchgangsöffnung beziehungsweise über die Durchgangsöffnungen fluidisch mit dem Brennraum verbunden und ansonsten mittels des Kammerelements, insbesondere mittels der Wandung, von dem Brennraum fluidisch getrennt ist. Durch die fluidische Verbindung der Vorkammer über die wenigstens eine Durchgangsöffnung mit dem Brennraum kann zumindest ein Teil des in dem Brennraum und insbesondere außerhalb der Vorkammer gebildeten beziehungsweise in dem Brennraum aufgenommenen Gemisches über die Durchgangsöffnung in die Vorkammer eingeleitet werden. Bewegt sich beispielsweise der Kolben in Richtung seines oberen Totpunkts, so fördert, insbesondere drückt oder presst, der Kolben beispielsweise zumindest den zuvor genannten Teil des Gemisches aus dem Brennraum durch die wenigstens eine Durchgangsöffnung hindurch und dadurch in die Vorkammer hinein.

Die Verbrennungskraftmaschine weist des Weiteren eine auch als Vorkammerzündkerze bezeichnete, erste Zündkerze auf, mittels welcher, insbesondere innerhalb eines Arbeitsspiels der Verbrennungskraftmaschine, in der Vorkammer wenigstens ein Zündfunke zum Zünden des über die wenigstens eine Durchgangsöffnung in die Vorkammer eingeleiteten Teils des Gemisches erzeugbar ist. Der mittels der ersten Zündkerze erzeugbare Zündfunke wird auch als erster Zündfunke bezeichnet. Die Verbrennungskraftmaschine umfasst außerdem eine dem Brennraum zugeordnete, zweite Zündkerze, mittels welcher, insbesondere innerhalb eines beziehungsweise des Arbeitsspiels der Verbrennungskraftmaschine, in dem Brennraum und somit außerhalb der Vorkammer wenigstens ein auch als zweiter Zündfunke bezeichneter Zündfunke zum Zünden des in dem Brennraum aufgenommenen beziehungsweise verbleibenden Gemisches erzeugbar ist.

Um nun einen besonders vorteilhaften, insbesondere befeuerten, Betrieb der Verbrennungskraftmaschine realisieren zu können, ist es erfindungsgemäß vorgesehen, dass entlang einer in einer sich senkrecht zur axialen Richtung des Zylinders erstreckenden Ebene verlaufenden, vorzugsweise geraden, Richtung die Vorkammer, der Injektor und die zweite Zündkerze in folgender Reihenfolge angeordnet sind: Die Vorkammer - der Injektor - die zweite Zündkerze. Hierunter ist zu verstehen, dass entlang der Richtung, das heißt entlang einer entlang der beziehungsweise in die Richtung verlaufenden Blickrichtung die Vorkammer, der Injektor und die zweite Zündkerze derart hintereinander beziehungsweise aufeinanderfolgend angeordnet sind, dass - entlang der Richtung, das heißt in eine entlang der beziehungsweise in die Richtung verlaufende Blickrichtung - der Injektor auf die Vorkammer und die zweite Zündkerze auf den Injektor folgt, sodass sozusagen die Vorkammer vor dem Injektor und der zweiten Zündkerze und die Zündkerze hinter der Vorkammer und dem Injektor angeordnet ist beziehungsweise dass der Injektor zwischen der Vorkammer und der zweiten Zündkerze angeordnet ist, wobei es nicht notwendigerweise vorgesehen sein muss, dass die beispielsweise gerade Richtung oder eine beispielsweise mit der Richtung zusammenfallende, gedachte Gerade die Vorkammer, den Injektor und die Zündkerze schneidet.

Durch die beschriebene Anordnung der Vorkammer, des Injektors und der zweiten Zündkerze kann eine vorteilhafte Brennraumgeometrie geschaffen werden, sodass beispielsweise eine zumindest im Wesentlichen zentrale, auch als Injektorposition bezeichnete Position des Injektors geschaffen beziehungsweise beibehalten werden kann, insbesondere trotz der Verwendung sowohl der Vorkammer als auch der zweiten Zündkerze. Außerdem kann beispielsweise ein besonders vorteilhafter, insbesondere flacher, Winkel realisiert werden, den die zweite Zündkerze, insbesondere ihre Längsachse und ganz insbesondere ihre Längsmittelachse, mit der axialen Richtung des Zylinders, insbesondere mit dessen Zylinderachse, oder mit der radialen Richtung des Zylinders einschließt. Unter der genannten Zylinderachse ist insbesondere eine beziehungsweise die Zylindermittelachse des Zylinders zu verstehen, welcher beispielsweise bezüglich der Zylinderachse zumindest im Wesentlichen rotationssymmetrisch ausgestaltet sein kann. Dabei kann die zweite Zündkerze, insbesondere deren Spitze, an welcher der zweite Zündfunke mittels der zweiten Zündkerze erzeugbar ist, besonders weit in den Brennraum hineinragen. Dadurch kann die zweite Zündkerze, insbesondere ihre Spitze, sehr nahe am Injektor angeordnet werden. Mit anderen Worten kann eine besonders starke, relative Nähe zwischen der zweiten Zündkerze, insbesondere der Spitze der zweiten Zündkerze, zu dem Injektor erreicht werden, sodass das Gemisch besonders vorteilhaft gezündet werden kann. Insbesondere durch die zentrale Injektorposition können etwaige Schwächen beziehungsweise Nachteile der Vorkammer beziehungsweise der Vorkammerzündkerze ausgeglichen werden, sodass ein besonders vorteilhafter, insbesondere wirkungsgradgünstiger und/oder emissions- und/oder kraftstoffverbrauchsarmer, Betrieb der Verbrennungskraftmaschine realisiert werden kann. Die Vorkammer beziehungsweise die Vorkammerzündkerze ist eine passive Vorkammer beziehungsweise eine passive Vorkammerzündkerze, da das Gemisch zunächst außerhalb der Vorkammer in dem Brennraum erzeugt wird und über die wenigstens eine Durchgangsöffnung in die Vorkammer eingeleitet, insbesondere mittels des Kolbens hineingefördert, wird. Des Weiteren kann eine relativ zentrale Lage der zweiten Zündkerze, insbesondere deren Spitze, geschaffen werden, wodurch die zweite Zündkerze beziehungsweise deren Spitze besonders vorteilhaft von einer Ladungsbewegung im Brennraum erfasst werden kann. In der Folge kann eine besonders stabile Verbrennung gewährleistet werden.

Vorzugsweise ist die zweite Zündkerze keine Vorkammerzündkerze, mithin eine von einer Vorkammerzündkerze unterschiedliche Zündkerze. Wieder mit anderen Worten ausgedrückt ist es vorzugsweise vorgesehen, dass die Verbrennungskraftmaschine frei von einer Vorkammer ist, in welcher der zweite Zündfunke mittels der zweiten Zündkerze erzeugbar ist. Hierdurch können etwaige Schwächen beziehungsweise Nachteile von Vorkammerzündkerzen beziehungsweise der Vorkammerzündkerze mittels der zweiten Zündkerze effektiv und effizient kompensiert werden, sodass sich ein besonders vorteilhafter Betrieb der Verbrennungskraftmaschine darstellen lässt.

Bei der Erfindung ist es vorgesehen, dass die Vorkammer gegenüber dem Injektor zu einer Auslassseite des Brennraums hin versetzt angeordnet ist, sodass umgekehrt betrachtet der Injektor gegenüber der Vorkammer zu einer der Auslassseite gegenüberliegenden Einlassseite des Brennraums hin versetzt angeordnet ist. Auf der Einlassseite wird die zuvor genannte Luft in den Brennraum eingeleitet.

In vorteilhafter Ausgestaltung der Erfindung ist es vorgesehen, dass eine beziehungsweise die zuvor genannte, parallel zu der Richtung verlaufende oder mit der Richtung zusammenfallende Gerade, welche in der senkrecht zur axialen Richtung des Zylinders und somit senkrecht zur Zylinderachse verlaufenden Ebene verläuft, die Vorkammer, den Injektor und die zweite Zündkerze schneidet. Mit anderen Worten, die Vorkammer, der Injektor und die zweite Zündkerze werden auch als Bauelemente bezeichnet. Grundsätzlich ist es denkbar, dass zumindest eines der Bauelemente entlang einer senkrecht zu der Geraden und in der Ebene verlaufenden Versetzungsgeraden vollständig versetzt zu den jeweils anderen Bauelementen angeordnet ist. Vorzugsweise ist es jedoch vorgesehen, dass die parallel zu der Richtung verlaufende oder mit der Richtung zusammenfallende Gerade, welche in der Ebene verläuft, die Vorkammer, den Injektor und die zweite Zündkerze schneidet, sodass die Bauelemente entlang der Versetzungsgeraden paarweise und jeweils zumindest teilweise auf gleicher Höhe angeordnet sind. Dadurch kann ein besonders vorteilhafter Betrieb der Verbrennungskraftmaschine realisiert werden, da eine besonders vorteilhafte und insbesondere stabile Verbrennung des Gemisches gewährleistet werden kann.

Eine weitere Ausführungsform zeichnet sich dadurch aus, dass die zuvor genannte Gerade durch die auch als Mittelachse bezeichnete Zylinderachse des Zylinders verläuft.

Hierdurch kann eine besonders vorteilhafte Anordnung der Bauelemente realisiert werden, sodass ein besonders vorteilhafter und insbesondere wirkungsgradgünstiger Betrieb der Verbrennungskraftmaschine darstellbar ist.

Beispielsweise ist dem Brennraum wenigstens ein Einlasskanal zugeordnet. Insbesondere ist es denkbar, dass dem Brennraum wenigstens oder genau zwei Einlasskanäle zugeordnet sind. Der jeweilige Einlasskanal ist dabei auf der Einlassseite angeordnet und von der Luft durchströmbar, sodass die den Einlasskanal durchströmende Luft mittels des Einlasskanals in den Brennraum einleitbar beziehungsweise einführbar ist. Dabei mündet der Einlasskanal an sich in den Brennraum. Ferner ist es denkbar, dass dem Brennraum wenigstens ein Auslasskanal zugeordnet ist. Insbesondere sind dem Brennraum wenigstens oder genau zwei Auslasskanäle zugeordnet. Der jeweilige Auslasskanal ist dabei auf der Auslassseite angeordnet. Aus dem Zünden und Verbrennen des Gemisches resultiert Abgas der Verbrennungskraftmaschine, deren Abgas aus dem Brennraum aus- und in den jeweiligen Auslasskanal einströmen kann. Der jeweilige Auslasskanal an sich mündet dabei in den Brennraum. Mit anderen Worten ist das Abgas mittels des Auslasskanals aus dem Brennraum abführbar. Dem jeweiligen Einlasskanal ist beispielsweise ein jeweiliges Einlassventil zugeordnet, welches, insbesondere relativ zu einem Zylinderkopf der Verbrennungskraftmaschine, translatorisch zwischen einer ersten Schließstellung und wenigstens einer ersten Offenstellung, insbesondere translatorisch bewegbar ist. In der Schließstellung versperrt das Einlassventil den zugehörigen Einlasskanal, sodass in der Schließstellung mittels des Einlassventils der jeweilige Einlasskanal fluidisch von dem Brennraum getrennt ist. In der ersten Offenstellung jedoch gibt das Einlassventil den zugehörigen Einlasskanal frei, sodass in der ersten Offenstellung der Einlasskanal, insbesondere über das zugehörige Einlassventil, fluidisch mit dem Brennraum verbunden ist. Dementsprechend ist beispielsweise dem jeweiligen Auslasskanal ein jeweiliges Auslassventil zugeordnet, welches, insbesondere relativ zu dem Zylinderkopf, zwischen einer zweiten Schließstellung und wenigstens einer zweiten Offenstellung, insbesondere translatorisch, bewegbar ist. In der zweiten Schließstellung versperrt das jeweilige Auslassventil den jeweiligen zugehörigen Auslasskanal, sodass in der zweiten Schließstellung der Auslasskanal mittels des zugehörigen Auslassventils von dem Brennraum fluidisch getrennt ist. In der zweiten Offenstellung jedoch gibt das Auslassventil den zugehörigen Auslasskanal frei, sodass in der zweiten Offenstellung der Auslasskanal, insbesondere über das jeweils zugehörige Auslassventil, fluidisch mit dem Brennraum verbunden ist. Somit kann in der ersten Offenstellung die Luft über das jeweilige Einlassventil in den Brennraum einströmen, und in der zweiten Offenstellung kann das Abgas über das jeweilige Auslassventil in den Auslasskanal einströmen. Da auf der Auslassseite das Abgas aus dem Brennraum ausströmt, ist die Auslassseite heißer als die Einlassseite. Dabei liegt der Erfindung insbesondere die Erkenntnis zugrunde, dass die gegenüber der Einlassseite heißere Auslassseite häufig ein Ausgangsort von klopfender Verbrennung beziehungsweise klopfenden Arbeitsspielen sein kann. Durch den Versatz der Vorkammer gegenüber dem Injektor zu der Auslassseite hin wird die Auslassseite besonders früh beziehungsweise früher als bei einer zu der Einlassseite hin versetzten Anordnung der Vorkammer von einer aus der Zündung des Gemisches beziehungsweise des Teils resultierenden Flammenfront erreicht, wodurch die Klopfneigung besonders gering gehalten werden kann.

Vorzugsweise ist der Zylinder beziehungsweise der Brennraum durch eine gedachte Trennebene in die Auslassseite und die Einlassseite unterteilt, wobei die gedachte Trennebene derart in axialer Richtung und somit entlang der Zylinderachse (Mittelachse des Zylinders) verläuft, dass die Zylinderachse in der Ebene verläuft. Dabei ist es vorzugsweise vorgesehen, dass die beziehungsweise alle dem Brennraum zugeordneten Einlassventile, über welche die Luft in den Brennraum einleitbar ist, auf der Einlassseite angeordnet sind, während die beziehungsweise alle dem Brennraum zugeordneten Auslassventile, über welche das Abgas aus dem Brennraum abführbar ist, auf der Auslassseite angeordnet sind. Dabei hat es sich als vorteilhaft gezeigt, wenn der Injektor zumindest überwiegend, insbesondere vollständig, auf der Einlassseite angeordnet ist, wobei die Vorkammer vorzugsweise zumindest überwiegend, insbesondere vollständig, auf der Auslassseite angeordnet sein kann. Durch die beschriebene Anordnung der Bauelemente ist die zweite Zündkerze beziehungsweise deren Spitze vorzugsweise auf der Einlassseite angeordnet.

Bei einer weiteren, besonders vorteilhaften Ausführungsform der Erfindung ist die Vorkammer zumindest teilweise zwischen den auf der Auslassseite angeordneten und dem Brennraum zugeordneten Auslassventilen der Verbrennungskraftmaschine angeordnet. Somit verläuft beispielsweise eine senkrecht zur zuvor genannten Geraden verlaufende, weitere Gerade wie beispielsweise die Versetzungsgerade vorzugsweise durch die Auslassventile und durch die Vorkammer. Dadurch kann ein besonders vorteilhafter Betrieb realisiert werden.

Vorzugsweise ist es vorgesehen, dass die zweite Zündkerze, insbesondere ihre Spitze, unter den Einlasskanälen beziehungsweise den Einlassventilen angeordnet ist, insbesondere in axialer Richtung des Zylinders.

In weiterer, besonders vorteilhafter Ausführungsform der Erfindung ist eine Zündstelle vorgesehen, an welcher mittels der zweiten Zündkerze der zweite Zündfunke erzeugbar ist.

Dabei hat es sich als besonders vorteilhaft gezeigt, wenn die Zündstelle in einem Randbereich des Brennraums und dabei vorzugsweise auf der Einlassseite angeordnet ist. Dadurch kann das im Brennraum aufgenommene beziehungsweise verbleibende Gemisch besonders vorteilhaft mittels der zweiten Zündkerze gezündet werden, wodurch beispielsweise etwaige Schwächen beziehungsweise Nachteile der Vorkammer beziehungsweise der Vorkammerzündkerze sehr gut kompensiert werden können.

Eine weitere Ausführungsform sieht vor, dass die Zündstelle beziehungsweise die zuvor genannte Spitze der zweiten Zündkerze, insbesondere entlang der vorgenannten, weiteren Geraden beziehungsweise der Verletzungsgeraden, zwischen den auf der Einlassseite angeordneten und dem Brennraum zugeordneten Einlassventilen der Verbrennungskraftmaschine angeordnet ist. Dadurch kann das Gemisch besonders vorteilhaft mittels der zweiten Zündkerze gezündet werden, sodass ein besonders vorteilhafter Betrieb der Verbrennungskraftmaschine darstellbar ist.

Weiterhin kann vorteilhafterweise vorgesehen sein, dass der größte Winkel, den die zweite Zündkerze, insbesondere ihre Längserstreckungsrichtung beziehungsweise Längsachse, mit der Zylinderachse beziehungsweise mit einer Ebene, über welche die Zylinderachse verläuft, einschließt, ein stumpfer Winkel ist, insbesondere größer als 90 Grad und kleiner als 110 Grad, vorzugsweise größer als 90 Grad und kleiner als 100 Grad und ganz vorzugsweise größer als 90 Grad und höchstens oder kleiner als 95 Grad ist. Dadurch kann die zweite Zündkerze vorteilhaft flach angeordnet beziehungsweise ausgerichtet werden, sodass sich ein besonders vorteilhafter Betrieb, insbesondere eine sichere beziehungsweise stabile Verbrennung, realisieren lässt.

In weiterer, besonders vorteilhafter Ausgestaltung der Erfindung ist der Injektor dazu ausgebildet, den Kraftstoff direkt in den Brennraum unter Ausbildung von durch den Kraftstoff gebildeten Kraftstoffstrahlen, insbesondere Spraykeulen, derart einzuspritzen, dass die beziehungsweise alle Kraftstoffstrahlen, insbesondere deren jeweilige Mittellängsachsen, die Vorkammer umgehen, mithin nicht direkt gegen beziehungsweise auf die Vorkammer beziehungsweise das Kammerelement auftreffen. Wieder mit anderen Worten ausgedrückt ist die Vorkammer beziehungsweise das Kammerelement zwischen den auch als Spraykeulen bezeichneten oder als Spraykeulen ausgebildeten Kraftstoffstrahlen angeordnet, sodass die Kraftstoffstrahlen (Spraykeulen) an der Vorkammer beziehungsweise dem Kammerelement vorbeigehen. Ferner ist es dabei vorzugsweise vorgesehen, dass wenigstens oder genau einer der Kraftstoffstrahlen direkt auf die zweite Zündkerze, insbesondere deren Spitze, an welcher der Zündfunke mittels der zweiten Zündkerze erzeugbar ist, trifft. Somit ist eine spezielle Strahlengeometrie, insbesondere Spraygeometrie, des Injektors vorgesehen, sodass der wenigstens oder genau ein Kraftstoffstrahl als ein Zündstrahl die vorzugsweise als Randkerze ausgebildete, zweite Zündkerze, insbesondere deren Spitze, vorteilhaft erreicht. Die übrigen Kraftstoffstrahlen sind von der Vorkammer beziehungsweise von dem Kammerelement weg orientiert, damit die Vorkammer beziehungsweise das die Vorkammer begrenzende Kammerelement nicht mit dem flüssigen Kraftstoff, der die Kraftstoffstrahlen bildet und demzufolge aus dem Injektor ausgespritzt wird, benetzt wird und/oder dass kein flüssiger Kraftstoff in die Vorkammer über die Durchgangsöffnung eindringt.

Ferner ist es denkbar, dass die vorzugsweise als Randkerze ausgebildete Zündkerze alternativ, insbesondere mit einer ähnlichen Geometrie, zwischen den Auslassventilen angeordnet ist und in der Folge vergleichbare Effekte erzielen kann. Mit anderen Worten ist es denkbar, dass die zweite Zündkerze, insbesondere deren Spitze, auf der Auslassseite angeordnet ist. Im Vergleich zur Anordnung der zweiten Zündkerze, insbesondere deren Spitze, auf der Einlassseite ist es dann jedoch schwieriger, auf der Auslassseite Zündspulen und Zündkabel für die zweite Zündkerze anzuordnen, da dort gegebenenfalls ein Bauraum durch einen oder mehrere Turbolader begrenzt ist und dann die zuvor genannten Bauteile thermisch belastet würden.

Ein zweiter Aspekt der Erfindung betrifft ein Verfahren zum Betreiben einer Verbrennungskraftmaschine gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

In vorteilhafter Ausgestaltung des zweiten Aspekts der Erfindung ist es vorgesehen, dass innerhalb wenigstens eines Arbeitsspiels der Verbrennungskraftmaschine zuerst mittels der zweiten Zündkerze wenigstens ein erster Zündfunke zum Zünden des Gemisches in dem Brennraum erzeugt wird, woraufhin mittels der ersten Zündkerze wenigstens ein zweiter Zündfunke in der Vorkammer erzeugt wird, wobei innerhalb des Arbeitsspiels vor dem mittels der zweiten Zündkerze bewirkten Erzeugen des ersten Zündfunkens und während des mittels der zweiten Zündkerze bewirkten Erzeugens des ersten Zündfunkens ein durch die erste Zündkerze bewirktes Erzeugen eines Zündfunkens unterbleibt. Dies bedeutet, dass innerhalb des wenigstens einen Arbeitsspiels zuerst mittels der zweiten Zündkerze und erst danach mittels der zweiten Zündkerze gezündet wird. Dadurch kann ein besonders vorteilhafter und insbesondere wirkungsgradgünstiger Betrieb realisiert werden. Insbesondere kann eine besonders stabile Verbrennung gewährleistet werden.

Eine weitere Ausführungsform zeichnet sich dadurch aus, dass in wenigstens einem ersten Teilbereich eines beziehungsweise des auch als Motorkennfeld bezeichneten Kennfelds der Verbrennungskraftmaschine innerhalb jeweiliger, zu dem ersten Teilbereich gehörende Arbeitsspiele der Verbrennungskraftmaschine sowohl mittels der ersten Zündkerze als auch mittels der zweiten Zündkerze jeweilige Zündfunken erzeugt werden. In wenigstens einem zweiten Teilbereich des Kennfelds, dessen zweiter Teilbereich höhere Lasten und höhere Drehzahlen als der erste Teilbereich umfasst, werden innerhalb jeweiliger, zu dem zweiten Teilbereich gehörende Arbeitsspiele der Verbrennungskraftmaschine bezogen auf die Zündkerzen ausschließlich mittels der ersten Zündkerze jeweilige Zündfunken erzeugt, sodass in dem zweiten Teilbereich die zweite Zündkerze, insbesondere durchgängig beziehungsweise unterbrechungsfrei, deaktiviert ist. Da der zweite Teilbereich gegenüber dem ersten Teilbereich höhere Drehzahlen und höhere Lasten umfasst, folgt in dem Motorkennfeld der zweite Teilbereich auf den ersten Teilbereich hin zu höheren Lasten und zu höheren Drehzahlen. Wieder mit anderen Worten ausgedrückt schließt sich in dem Motorkennfeld der zweite Teilbereich, insbesondere unmittelbar beziehungsweise direkt, an den ersten Teilbereich hin zu höheren Lasten und hin zu höheren Drehzahlen an.

Als besonders vorteilhaft hat es sich gezeigt, wenn Zündzeitpunkte beziehungsweise Zündwinkel, zu welchen mittels der zweiten Zündkerze jeweilige Zündfunken erzeugt werden, unabhängig von Zündzeitpunkten beziehungsweise Zündwinkeln, zu welchen mittels der ersten Zündkerze jeweilige Zündfunken erzeugt werden, mittels einer elektronischen Recheneinrichtung der Verbrennungskraftmaschine, deren elektronische Recheneinrichtung auch als Motorsteuerung oder Motorsteuergerät bezeichnet wird, eingestellt werden. Hierdurch können die Zündfunken mittels der Zündkerzen besonders bedarfsgerecht erzeugt werden, insbesondere derart, dass sich ein besonders wirkungsgradgünstiger Betrieb der Verbrennungskraftmaschine realisieren lässt.

Alternativ oder zusätzlich kann vorgesehen sein, dass wenigstens ein Zündparameter, gemäß welchem mittels der jeweiligen Zündkerze wenigstens ein jeweiliger Zündfunke erzeugt wird, eingestellt wird, insbesondere betriebsabhängig oder betriebspunktabhängig. Der Zündparameter umfasst beispielsweise eine Zündenergie des jeweiligen Zündfunkens und/oder eine auch als Funkendauer bezeichnete Dauer des jeweiligen Zündfunkens und/oder einen jeweiligen Funkenstrom zum Erzeugen des jeweiligen Zündfunkens. Die Zündkerzen werden auch als Zündsysteme bezeichnet. Dabei ist es vorzugsweise vorgesehen, dass die Zündsysteme unabhängig voneinander ihren jeweiligen oder ihre jeweiligen Zündparameter einstellen können.

Bei einer weiteren, besonders vorteilhaften Ausführungsform der Erfindung ist es vorgesehen, dass Zündzeitpunkte, zu welchen mittels der zweiten Zündkerze jeweilige Zündfunken erzeugt werden, mittels der elektronischen Recheneinrichtung auf Basis eines ersten Kennfelds eingestellt werden, welches unabhängig von einem zweiten Kennfeld ist, auf dessen Basis Zündzeitpunkte, zu welchen mittels der ersten Zündkerze jeweilige Zündfunken erzeugt werden, mittels der elektronischen Recheneinrichtung eingestellt werden. Hierdurch kann ein zumindest nahezu unabhängiger Betrieb der ersten Zündkerze von der zweiten Zündkerze realisiert werden, sodass die Zündkerzen bedarfsgerecht verwendet werden können, um Zündfunken zu erzeugen. Dadurch kann ein besonders vorteilhafter Betrieb der Verbrennungskraftmaschine gewährleistet werden.

Schließlich hat es sich als besonders vorteilhaft gezeigt, wenn Zündzeitpunkte, zu welchen mittels der zweiten Zündkerze jeweilige Zündfunken erzeugt werden, mittels der elektronischen Recheneinrichtung in Abhängigkeit von einer beziehungsweise der Last, einer Temperatur und einer beziehungsweise der Drehzahl der Verbrennungskraftmaschine eingestellt werden. Dadurch kann ein besonders vorteilhafter Betrieb der zweiten Zündkerze realisiert werden, sodass ein besonders vorteilhafter und insbesondere wirkungsgradgünstiger und somit kraftstoffverbrauchsarmer Betrieb der Verbrennungskraftmaschine gewährleistet werden kann.

Die Verbrennungskraftmaschine weist beispielsweise eine als Kurbelwelle ausgebildete Abtriebswelle auf, die über ein Pleuel gelenkig mit dem Kolben verbunden ist. Hierdurch können die translatorischen Bewegungen des Kolbens in dem Zylinder in eine rotatorische Bewegung der Abtriebswelle umgewandelt werden. Dabei umfasst das jeweilige Arbeitsspiel der Kurbelwelle beispielsweise genau zwei vollständige Umdrehungen der Kurbelwelle, mithin 720 Grad Kurbelwinkel, insbesondere dann, wenn die Verbrennungskraftmaschine als ein Vier-Takt-Motor ausgebildet ist. Somit ist vorzugsweise die Verbrennungskraftmaschine als ein Vier-Takt-Motor ausgebildet, sodass das jeweilige Arbeitsspiel genau vier Takte der Verbrennungskraftmaschine umfasst. Die Erfindung kann jedoch selbstverständlich auch für andere Motoren wie beispielsweise Zwei-Takt-Motoren und/oder Wankelmotoren verwendet werden. Bei einem im Folgenden beispielhaft beschriebenen Vier-Takt-Motor ist ein erster der Takte ein Einlass- oder Ansaugtakt, bei welchem sich der Kolben aus seinem oberen Totpunkt in seinen unteren Totpunkt bewegt und die Luft in den Brennraum eingebracht wird. Ein zweiter der Takte ist ein Verdichtungs- oder Kompressionstakt, bei dem sich der Kolben aus seinem unteren Totpunkt in seinen oberen Totpunkt bewegt und dabei das Gemisch verdichtet. Vorzugsweise folgt der zweite Takt unmittelbar auf den ersten Takt, sodass zwischen dem ersten und dem zweiten Takt kein anderer, weiterer Takt der Verbrennungskraftmaschine liegt. Ein dritter der Takte ist ein Arbeitstakt, bei dem der Kolben dadurch angetrieben und somit aus einem oberen Totpunkt in seinen unteren Totpunkt bewegt wird, dass das Gemischt gezündet wurde und verbrennt. Vorzugsweise schließt sich der dritte Takt unmittelbar an den zweiten Takt an. Der sich vorzugsweise unmittelbar an den dritten Takt anschließende vierte Takt ist ein Auslass- oder Ausschiebetakt, bei dem sich der Kolben von seinem unteren Totpunkt in seinen oberen Totpunkt bewegt und dabei das Abgas aus dem Brennraum ausschiebt, insbesondere in den jeweiligen Auslasskanal. Unter der zuvor genannten Drehzahl der Verbrennungskraftmaschine ist eine beziehungsweise die Drehzahl der Kurbelwelle zu verstehen, die sich insbesondere während des befeuerten Betriebs der Verbrennungskraftmaschine mit der Drehzahl relativ zu einem beispielsweise als Kurbelgehäuse, insbesondere als Zylinderkurbelgehäuse, ausgebildeten Gehäuseelement der Verbrennungskraftmaschine dreht. Unter der zuvor genannten Last ist insbesondere ein Drehmoment zu verstehen, welches von der Verbrennungskraftmaschine über die Kurbelwelle bereitgestellt wird.

Das erfindungsgemäße Verfahren ist eine vorteilhafte Betriebsstrategie, welche beispielsweise eine Einspritzstrategie und/oder eine Zündstrategie umfasst. Dabei wird beispielsweise gemäß der Einspritzstrategie mittels des Injektors der Kraftstoff direkt in den Brennraum eingespritzt, insbesondere innerhalb des jeweiligen Arbeitsspiels. Gemäß der Zündstrategie werden die Zündkerzen betrieben, sodass gemäß der Zündstrategie mittels der Zündkerzen bedarfsgerecht Zündfunken erzeugt werden. Durch ein Zusammenwirken der Einspritzstrategie und der Zündstrategie kann die Vorkammer beziehungsweise Vorkammerzündkerze hinsichtlich ihrer Wirkung optimiert werden, und etwaige Nachteile beziehungsweise Schwächen der Vorkammerzündkerze beziehungsweise der Vorkammer können kompensiert werden.

Die Erfindung basiert dabei insbesondere auf folgenden Überlegungen und Erkenntnissen: Bei niedriger, auch als Motorlast bezeichneter Last der Verbrennungskraftmaschine und speziell in einem auch als Motorwarmlauf bezeichneten Warmlauf der Verbrennungskraftmaschine kann die Vorkammer verschleppte Verbrennungen und Zündaussetzer verursachen. In diesen Betriebszuständen wird das Gemisch durch die beispielsweise als Randzündkerze oder Randkerze ausgebildete, zweite Zündkerze außerhalb der Vorkammer in dem Brennraum gezündet, und die Vorkammerzündkerze beziehungsweise mittels der Vorkammerzündkerze wird deutlich später gezündet, um zyklische Schwankungen zu minimieren. Die Wirkung der Vorkammer beziehungsweise Vorkammerzündkerze wird dabei gesteigert, wenn vor der Zündung der Vorkammer, das heißt vor der Zündung in der Vorkammer, die Verbrennung durch die zweite Zündkerze ausgelöst wird und dadurch in der Vorkammer eine Druck- und Temperaturerhöhung bewirkt wird. Bei zu später Zündung der Vorkammer, das heißt bei zu später Zündung in der Vorkammer, hat die Flammenfront jedoch die Vorkammer erreicht, und es wird Abgas in die Vorkammer geschoben, was zu einem Erlöschen der Verbrennung in der Vorkammer führen kann. Entsprechend existiert temperatur-, last- und drehzahlabhängig ein vorteilhafter Differenzwinkel zwischen der Zündung der zweiten Zündkerze und der Zündung der Vorkammerzündkerze, mithin in der Vorkammer. Unter dem Differenzwinkel ist ein Unterschied beziehungsweise eine Differenz zwischen dem Zündzeitpunkt, zu welchem mittels der ersten Zündkerze ein Zündfunken in der Vorkammer erzeugt wird, und dem Zündzeitpunkt zu verstehen, zu welchem mittels der zweiten Zündkerze ein Zündfunken außerhalb der Vorkammer erzeugt wird.

Mit steigender Motorlast wird die Vorkammer beziehungsweise die Vorkammerzündkerze zunehmend wirksam und bestimmt die Verbrennung. Die zweite Zündkerze bewirkt nur noch eine geringe Beschleunigung der Verbrennung. In diesem Betriebsbereich kann ein Restgasanteil im Brennraum durch eine größere Ventilüberschneidung und/oder durch eine externe Abgasrückführung gesteigert werden, um den Kraftstoffverbrauch zu reduzieren und Stickoxid-Emissionen (NOₓ-Emissionen) zu minimieren. Zusätzlich kann eine größere Zündwinkeldifferenz zwischen der zweiten Zündkerze und der Vorkammerzündkerze den maximalen Druckgradienten begrenzen und die Motorakustik vorteilhaft beeinflussen. Bei hoher Motorlast und/oder bei hohen Drehzahlen, insbesondere bei Drehzahlen oberhalb von 3.000 Umdrehungen pro Minute, wobei es sich hierbei um einen Bereich handelt, in welchem ein Abgasturbolader die Verbrennungskraftmaschine auflädt, mithin die dem Brennraum zuzuführende Luft verdichtet, hat die zweite Zündkerze beziehungsweise ihre Zündung keinen vorteilhaften Einfluss mehr auf den Verbrennungsablauf, sodass es vorteilhaft ist, die zweite Zündkerze abzuschalten. Hierunter ist zu verstehen, dass dann ein Betrieb der zweiten Zündkerze unterbleibt, mithin unterbleiben durch die zweite Zündkerze bewirkte Zündungen beziehungsweise Zündfunken. Damit wird speziell eine Temperatur einer Masseelektrode der zweiten Zündkerze hinreichend gering gehalten, und die Gefahr von Vorentflammungen kann ebenfalls besonders gering gehalten werden. Im Bereich des klopfenden Betriebs sollte eine Klopfregelung, welche dem klopfenden Betrieb entgegenwirkt, auf beide Zündsysteme, mithin auf beide Zündkerzen, wirken und die Zündkerzen beispielsweise auf Basis unterschiedlicher Parametrierung betreiben, insbesondere regeln. Hierzu ist es vorteilhaft, wenn beide Zündsysteme, das heißt wenn beide Zündkerzen, unabhängig voneinander betrieben werden, mithin betreibbar sind, insbesondere auf Basis von voneinander unabhängigen Kennfeldern und/oder Algorithmen. Ferner sind Diagnosefunktionen vorteilhaft, um beispielsweise einen Ausfall eines der Zündsysteme zu erkennen, zum Beispiel über ein Körperschallsignal eines Klopfsensors und eine Auswertung eines Kurbelwellensensors hinsichtlich einer Drehungleichförmigkeit, insbesondere der Kurbelwelle. Die Klopfregelung kann alternativ oder zusätzlich durch eine lonenstrommessung an einer bzw. der jeweiligen Zündkerze oder an beiden Zündkerzen erfolgen und damit die Nachteile einer Körperschall-Sensorik umgehen.

Im Niedriglastbereich, insbesondere in dem ersten Teilbereich des Kennfelds, kann die Verbrennungsstabilität durch eine Doppeleinspritzung unterstützt werden. Unter einer Doppeleinspritzung ist insbesondere zu verstehen, dass, insbesondere in dem ersten Teilbereich des Kennfelds, innerhalb des jeweiligen Arbeitsspiels genau zwei aufeinanderfolgende und zeitlich voneinander beabstandete Einspritzungen mittels des Injektors durchgeführt werden, wobei durch die jeweilige Einspritzung mittels des Injektors der Kraftstoff direkt in den Brennraum eingespritzt wird. Die jeweilige Einspritzung wird auch als Einspritzimpuls bezeichnet. Durch einen späten, zweiten Einspritzimpuls kann in der Nähe der zweiten Zündkerze ein vorteilhaft angereichertes Gemisch mit vorteilhaften Zündbedingungen erzeugt werden, was zu einer geringeren Aussetzrate beiträgt. Bei hoher Motorlast, insbesondere in dem zweiten Teilbereich, kann die Gefahr von Vorentflammungen in der Vorkammer durch hohe Temperaturen speziell einer Masseelektrode der ersten Zündkerze bestehen. Um die Neigung zur Vorentflammung zu minimieren, kann hier eine Dreifacheinspritzung eingesetzt, das heißt durchgeführt, werden. Unter der Dreifacheinspritzung ist insbesondere zu verstehen, dass, insbesondere in dem zweiten Teilbereich, innerhalb des jeweiligen Arbeitsspiels genau drei Einspritzungen mittels des Injektors durchgeführt werden, wobei die Einspritzungen zeitlich voneinander beabstandet sind und aufeinanderfolgen. Im Rahmen der jeweiligen Einspritzung wird mittels des Injektors der Kraftstoff direkt in den Brennraum eingespritzt. Somit kann eine späte Gemisch-Homogenisierung dazu beitragen, Vorentflammungen zu vermeiden.

Eine weitere, der Erfindung zugrundeliegende Erkenntnis ist, dass passive Vorkammer-Brennverfahren, das heißt solche Brennverfahren, welche eine passive Vorkammer beziehungsweise Vorkammerzündkerze nutzen, zu instabiler Verbrennung bei niedriger Motorlast und im Motorwarmlauf neigen, insbesondere bei als Ottomotoren ausgebildeten Verbrennungskraftmaschinen. Dies bedeutet, dass die erfindungsgemäße Verbrennungskraftmaschine als ein Ottomotor ausgebildet sein kann.

Um solche instabile Verbrennungen zu vermeiden, kommen die zwei Zündkerzen und die Vorkammer zum Einsatz. Dabei hat es sich als vorteilhaft gezeigt, wenn der Zündzeitpunkt beziehungsweise Zündwinkel der zweiten Zündkerze durch ein separates Zündwinkelkennfeld abhängig von der Drehzahl, der Last und der Temperatur der Verbrennungskraftmaschine eingestellt wird. In Teilbereichen, zum Beispiel bei hohen Lasten und Drehzahlen, ist die zweite Zündkerze vorzugsweise deaktiviert, um die vorteilhafte Wirkung der Vorkammer nicht zu beeinträchtigen. Dabei ist es vorteilhaft, wenn der Zündwinkel beziehungsweise der Zündzeitpunkt der zweiten Zündkerze unabhängig von dem der Vorkammerzündkerze einstellbar ist beziehungsweise eingestellt wird.

Die erfindungsgemäße Verbrennungskraftmaschine wurde als Versuchsmotor aufgebaut und untersucht, wobei die zweite Zündkerze verwendet wurde und ein von der Vorkammerzündkerze unabhängiges Zündsystem darstellte. Dabei zeigte sich, dass abhängig von einem Betriebszustand der Verbrennungskraftmaschine der Zündwinkel beziehungsweise Zündzeitpunkt der zweiten Zündkerze vor oder nach der Zündung beziehungsweise dem Zündwinkel (Zündzeitpunkt) der Vorkammerzündkerze eingestellt wurde. Bei hohen Drehzahlen und Lasten hat es sich als vorteilhaft gezeigt, die zweite Zündkerze abzuschalten, um die Klopfneigung beziehungsweise Vorentflammungen zu vermeiden. Durch die Randkerze, die nicht gezündet wurde, konnten vorteilhaft geringe Bauteiltemperaturen erreicht werden.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: ausschnittsweise eine schematische Schnittansicht einer erfindungsgemäßen Verbrennungskraftmaschine;
- Fig. 2: ausschnittsweise eine schematische und geschnittene Seitenansicht der Verbrennungskraftmaschine;
- Fig. 3: eine schematische Darstellung eines auch als Motorkennfeld bezeichneten Kennfelds der Verbrennungskraftmaschine;
- Fig. 4: eine weitere schematische Darstellung des Kennfelds; und
- Fig. 5: eine weitere schematische Darstellung des Kennfelds.

In den Fig. sind gleiche oder funktionsgleiche Elemente mit gleichen Bezugszeichen versehen.

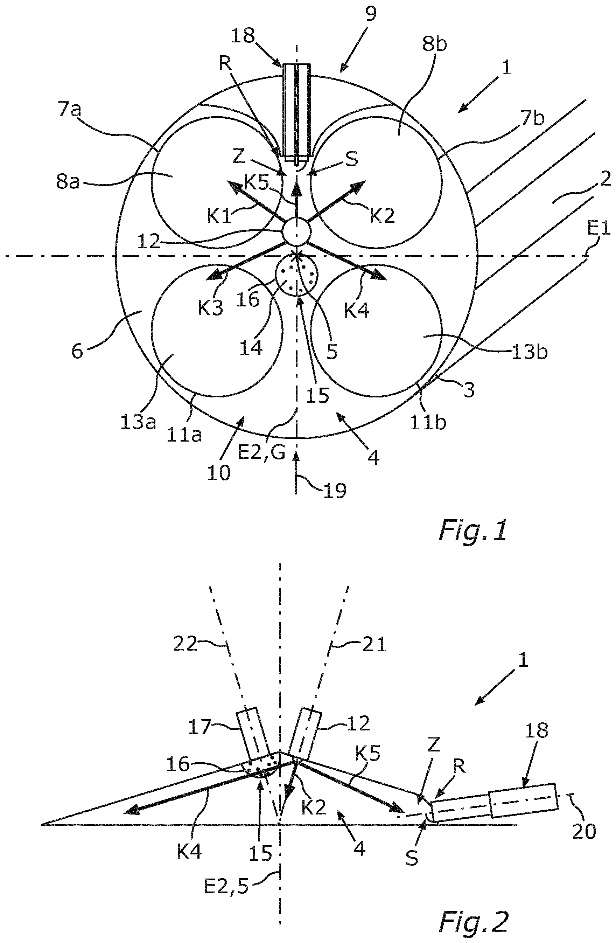

Fig. 1 zeigt ausschnittsweise in einer schematischen Schnittansicht eine Verbrennungskraftmaschine 1. Die Verbrennungskraftmaschine 1 weist ein Gehäuseelement 2 auf, welches vorzugsweise als ein Kurbelgehäuse, insbesondere als ein Zylinderkurbelgehäuse, ausgebildet ist. Das Gehäuseelement 2 bildet beziehungsweise begrenzt wenigstens einen Zylinder 3 der Verbrennungskraftmaschine 1. In dem Zylinder 3 ist ein in den Fig. nicht dargestellter Kolben translatorisch bewegbar aufgenommen. Die Verbrennungskraftmaschine 1 umfasst außerdem eine als Kurbelwelle ausgebildete Abtriebswelle, welche drehbar an dem Gehäuseelement 2 gelagert ist. Der in dem Zylinder 3 angeordnete Kolben ist über ein Pleuel gelenkig mit der Kurbelwelle verbunden, sodass die translatorischen Bewegungen des Kolbens in dem Zylinder 3 in eine rotatorische Bewegung der Kurbelwelle umgewandelt werden können. Dabei begrenzen der Zylinder 3 und der Kolben jeweils teilweise einen Brennraum 4 der Verbrennungskraftmaschine 1. Der Zylinder 3 weist eine auch als Mittelachse bezeichnete Zylinderachse 5 auf, wobei der Zylinder 3 beispielsweise bezogen auf die Zylinderachse 5, die in axialer Richtung des Zylinders 3 verläuft, zumindest im Wesentlichen rotationssymmetrisch ausgebildet ist. In eine parallel zur Zylinderachse 5 verlaufende erste Richtung ist der Brennraum 4 durch den Kolben begrenzt. In eine parallel zu der Zylinderachse 5 verlaufende und der ersten Richtung entgegengesetzte, zweite Richtung ist der Brennraum 4 durch ein Brennraumdach 6 begrenzt. Das Brennraumdach 6 ist beispielsweise durch einen Zylinderkopf der Verbrennungskraftmaschine 1 gebildet. Der Zylinderkopf ist separat von dem Gehäuseelement 2 ausgebildet und mit dem Gehäuseelement 2 verbunden.

Dem Brennraum 4 sind beispielhaft genau zwei Einlasskanäle 7a, b zugeordnet, welche beispielsweise durch den Zylinderkopf gebildet beziehungsweise begrenzt sind und an sich in den Brennraum 4 münden. Insbesondere während eines befeuerten Betriebs der Verbrennungskraftmaschine 1 strömt Luft durch die Einlasskanäle 7a, b, mittels welchen die die Einlasskanäle 7a, b durchströmende Luft in den Brennraum 4 eingeleitet wird. Dem jeweiligen Einlasskanal 7a, b ist ein jeweiliges Einlassventil 8a, b zugeordnet. Das jeweilige Einlassventil 8a, b ist relativ zu dem Zylinderkopf und/oder translatorisch zwischen einer ersten Schließstellung und wenigstens einer ersten Offenstellung bewegbar. In der ersten Schließstellung versperrt das jeweilige Einlassventil 8a, b den jeweils zugehörigen Einlasskanal 7a, b, sodass der jeweilige Einlasskanal 7a, b von dem Brennraum 4 fluidisch getrennt ist und keine Luft aus dem jeweiligen Einlasskanal 7a, b in den Brennraum 4 einströmen kann. In der jeweiligen, ersten Offenstellung jedoch gibt das jeweilige Einlassventil 8a, b den jeweils zugehörigen Einlasskanal 7a, b frei, sodass die Luft, die den jeweiligen Einlasskanal 7a, b durchströmt, über das jeweilige, geöffnete Einlassventil 8a, b aus dem Einlasskanal 7a, b ausströmen und in den Brennraum 4 einströmen kann beziehungsweise strömt. Eine gedachte, erste Ebene E1, in welcher die Zylinderachse 5 verläuft, unterteilt den Brennraum 4 und somit den Zylinder 3 in eine Einlassseite 9 und eine Auslassseite 10. Dabei unterteilt die Ebene E1 den Brennraum 4 beziehungsweise den Zylinder 3 genau hälftig in die Einlassseite 9 und die Auslassseite 10. Es ist erkennbar, dass die Einlasskanäle 7a, b auf der Einlassseite 9 in den Brennraum 4 mündet, wobei die Einlassventile 8a, b auf der Einlassseite 9 angeordnet sind.

Anstatt der translatorisch bewegbaren Einlassventile 8a, b könnten Drehschieberventile oder andere Ventile verwendet werden. Die Anzahlen und Anordnungen der Bauelemente sind beispielhaft gezeigt und beschrieben und können variieren. Die vorigen und folgenden Ausführungen können auch auf andere Motoren übertragen werden, wobei die Verbrennungskraftmaschine als Zwei- oder Dreiventilmotor ausgebildet sein könnte. Ein Das im Folgenden beschriebene Brennverfahren funktioniert auch bei Zweiventil- oder Dreiventilmotoren oder anderen Motoren. Es können auch Motoren mit fünf oder sechs Ventilen mit Vorkammern und zweiter Zündkerze ausgestattet werden.

Dem Brennraum 4 sind genau zwei Auslasskanäle 11a, b zugeordnet, welche beispielsweise durch den Zylinderkopf gebildet beziehungsweise begrenzt sind. Des Weiteren ist dem Brennraum 4 ein Injektor 12 zugeordnet, mittels welchem ein flüssiger Kraftstoff direkt in den Brennraum 4 einspritzbar ist beziehungsweise, insbesondere während des befeuerten Betriebs, eingespritzt wird. Hierdurch wird in dem Brennraum 4 ein einfach auch als Gemisch bezeichnetes Kraftstoff-Luft-Gemisch gebildet, welches die Luft, die aus den Einlasskanälen 7a, b ausströmt und in den Brennraum 4 einströmt, mithin mittels der Einlasskanäle 7a, b in den Brennraum 4 eingeleitet wird, und den Kraftstoff umfasst, der mittels des Injektors 12 direkt in den Brennraum 4 eingespritzt wird. Alternativ oder zusätzlich kann der Kraftstoff durch einen Saugrohrinjektor eingespritzt werden, unter anderem zusammen mit einem direkteinspritzenden Injektor als duale Einspritzung.

Insbesondere wird das Gemisch innerhalb eines jeweiligen Arbeitsspiels der Verbrennungskraftmaschine 1 gebildet. Außerdem wird das Gemisch innerhalb des jeweiligen Arbeitsspiels gezündet und dadurch verbrannt, woraus Abgas der vorzugsweise als Ottomotor ausgebildeten Verbrennungskraftmaschine resultiert. Das Abgas kann in die Auslasskanäle 11a, b einströmen und somit aus dem Brennraum 4 ausströmen, mithin mittels der Auslasskanäle 11a, b aus dem Brennraum 4 abgeführt werden. Dem jeweiligen Auslasskanal 11a, b ist ein jeweiliges Auslassventil 13a, b zugeordnet. Das jeweilige Auslassventil 13a, b ist, insbesondere translatorisch und/oder relativ zu dem Zylinderkopf, zwischen einer zweiten Schließstellung und wenigstens einer zweiten Offenstellung bewegbar. In der zweiten Schließstellung versperrt das jeweilige Auslassventil 13a, b den jeweiligen, zugehörigen Auslasskanal 11a, b, sodass der jeweilige Auslasskanal 11a, b fluidisch von dem Brennraum 4 getrennt ist und kein Abgas beziehungsweise kein Gas aus dem Brennraum 4 in den jeweiligen Auslasskanal 11a, b einströmen kann. In der jeweiligen zweiten Offenstellung jedoch gibt das jeweilige Auslassventil 13a, b den jeweils zugehörigen Auslasskanal 11a, b frei, sodass das Abgas über das jeweilige Auslassventil 13a, b in den jeweiligen Auslasskanal 11a, b einströmen kann und somit aus dem Brennraum 4 ausströmen kann. Es ist erkennbar, dass die Auslasskanäle 11a, b auf der Auslassseite 10 in den Brennraum 4 münden, wobei die Auslassventile 13a, b, insbesondere vollständig, auf der Auslassseite 10 angeordnet sind. Eine weitere, gedachte und senkrecht zur ersten Ebene E1 verlaufende, zweite Ebene ist in Fig. 1 mit E2 bezeichnet, wobei auch die Ebene E2 durch die Zylinderachse 5 hindurch verläuft. Die Verbrennungskraftmaschine 1 weist außerdem eine dem Brennraum 4 zugeordnete Vorkammer 14 auf, welche bis auf mehrere Durchgangsöffnungen 15 fluidisch von dem Brennraum 4 getrennt und über die Durchgangsöffnungen 15 fluidisch mit dem Brennraum 4 verbunden ist. Hierzu weist die Verbrennungskraftmaschine 1 beispielsweise ein insbesondere einstückiges Kammerelement 16 auf, durch welches die Vorkammer 14, insbesondere ihr Volumen, zumindest überwiegend, insbesondere vollständig, begrenzt ist. Dabei ist die Vorkammer 14 mittels des Kammerelements 16 von dem Brennraum 4 fluidisch getrennt. Die Durchgangsöffnungen 15 sind in dem Kammerelement 16 ausgebildet, sodass die Vorkammer 14 über die Durchgangsöffnungen 15 des Kammerelements 16 fluidisch mit dem Brennraum 4 verbunden ist. Hierdurch kann zumindest ein Teil des Gemisches aus dem Brennraum 4 über die Durchgangsöffnungen 15 in die Vorkammer 14 eingeleitet werden, das heißt einströmen.

Dem Brennraum 4 ist eine in Fig. 2 besonders schematisch dargestellte und auch als Vorkammerzündkerze bezeichnete, erste Zündkerze 17 zugeordnet, mittels welcher, insbesondere innerhalb des jeweiligen Arbeitsspiels, wenigstens ein Zündfunke in der Vorkammer 14 erzeugbar ist. Hierdurch kann der über die Durchgangsöffnungen 15 in die Vorkammer 14 eingeleitete Teil des Gemisches in der Vorkammer 14 gezündet und in der Folge verbrannt werden. Des Weiteren ist dem Brennraum 4 eine zweite Zündkerze 18 zugeordnet, mittels welcher, insbesondere innerhalb des jeweiligen Arbeitsspiels, in dem Brennraum 4 und somit außerhalb der Vorkammer 14 wenigstens ein Zündfunke zum Zünden des in dem Brennraum 4 aufgenommenen beziehungsweise verbleibenden Gemisches erzeugbar ist.

Um nun einen besonders vorteilhaften und insbesondere wirkungsgradgünstigen Betrieb der Verbrennungskraftmaschine 10 realisieren zu können, ist es vorgesehen, dass entlang einer in einer sich senkrecht zur axialen Richtung des Zylinders 3 und somit senkrecht zu den Ebenen E1 und E2 erstreckenden Ebene verlaufenden, geraden, in der Ebene E2 verlaufenden und in Fig. 1 durch einen Pfeil 19 veranschaulichten Richtung die Vorkammer 14, der Injektor 12 und die zweite Zündkerze 18 in folgender Reihenfolge hintereinander beziehungsweise aufeinanderfolgend angeordnet sind: Die Vorkammer 14 - der Injektor 12 - die zweite Zündkerze 18. Dabei fällt die durch den Pfeil 19 veranschaulichte Richtung mit einer in der Ebene E2 und somit senkrecht zur Ebene E1 verlaufenden Geraden G zusammen, die die Vorkammer 14, den Injektor 12 und die zweite Zündkerze 18 schneidet. Die Gerade G verläuft dabei durch die Zylinderachse 5 (Mittelachse) des Zylinders 3.

Aus Fig. 1 ist erkennbar, dass der Injektor 12 ein bezüglich des Zylinders 3 beziehungsweise des Brennraums 4 zumindest im Wesentlichen zentral angeordneter Injektor ist, wobei die Vorkammer 14 gegenüber dem Injektor 12 zu der Auslassseite 10 hin versetzt angeordnet ist. Dabei ist die Vorkammer 14 zumindest überwiegend auf der Auslassseite 10 angeordnet, wobei der Injektor 12 zumindest überwiegend, insbesondere vollständig, auf der Einlassseite 9 angeordnet ist. Auch die Zündkerze 18 beziehungsweise ihre Spitze S, an welcher mittels der Zündkerze 18 ein Zündfunke in dem Brennraum 4 und außerhalb der Vorkammer 14 erzeugbar ist, vollständig auf der Einlassseite 9 angeordnet. Des Weiteren ist die Vorkammer 14 zumindest teilweise, insbesondere zumindest überwiegend, zwischen den auf der Auslassseite 10 angeordneten Auslassventilen 13a, b angeordnet. Außerdem ist eine Zündstelle Z, an welcher mittels der zweiten Zündkerze 18 der Zündfunke erzeugbar ist, auf der Einlassseite 9 angeordnet. Die Zündstelle Z und somit die Spitze S sind - wie besonders gut aus Fig. 2 erkennbar ist - in einem Randbereich R des Brennraums 4 angeordnet, sodass die zweite Zündkerze 18, deren Längsachse beziehungsweise Längserstreckungsrichtung in Fig. 2 durch eine strichpunktierte Linie 20 veranschaulicht ist, auch als Randkerze oder Randzündkerze bezeichnet wird. Dabei ist die Zündstelle Z beziehungsweise die Spitze S zwischen den Einlassventilen 8a, b angeordnet.

Wie des Weiteren besonders gut aus Fig. 1 und 2 erkennbar ist, ist der Injektor 12 dazu ausgebildet, den Kraftstoff direkt in den Brennraum 4 unter Ausbildung von durch den Kraftstoff gebildeten und auch als Einspritzstrahlen bezeichneten Kraftstoffstrahlen K1, K2, K3, K4 und K5 derart einzuspritzen, dass die Kraftstoffstrahlen K1-5, insbesondere deren jeweilige Mittellängsachsen, die Vorkammer 14 beziehungsweise das Kammerelement 16 umgehen, mithin nicht direkt auf beziehungsweise gegen die Vorkammern 14 beziehungsweise das Kammerelement 16 treffen. Es sind auch Injektoren mit deutlich mehr Spraykeulen möglich, z B Sieben- oder Achtlochinjektoren. Vorteilhaft ist, dass die Vorkammer 14 von keinem Einspritzstrahl getroffen wird und mindestens ein Strahl zur Randkerze hin einspritzt.

Wenigstens oder genau einer der Kraftstoffstrahlen K1-5, vorliegend der Kraftstoffstrahl K5, ist derart ausgerichtet, dass er direkt auf die zweite Zündkerze 18, insbesondere auf deren Spitze S, trifft. Der jeweilige Kraftstoffstrahl K1-5 ist beispielsweise eine Spraykeule. Aus Fig. 2 ist erkennbar, dass der größte Winkel, den die Zündkerze 18, insbesondere ihre Längsachse beziehungsweise Längserstreckungsrichtung, mit der Ebene E2 beziehungsweise mit der Zylinderachse 5 einschließt, größer als 90 Grad und kleiner als 100 Grad ist. Dadurch kann die Zündkerze 18 besonders flach angeordnet werden, sodass ihre Spitze S besonders nahe an dem Injektor 12, dessen Längsachse beziehungsweise Längserstreckungsrichtung in Fig. 2 durch eine strichpunktierte Linie 21 veranschaulicht ist, angeordnet werden kann. Auch die Zündkerze 17, deren Längsachse beziehungsweise Längserstreckungsrichtung in Fig. 2 durch eine strichpunktierte Linie 22 veranschaulicht ist, kann vorteilhaft angeordnet und insbesondere relativ zu dem Brennraum 4 und relativ zu dem Injektor 12 und relativ zu der Zündkerze 18 ausgerichtet werden. Aus Fig. 2 ist erkennbar, dass die Längsachsen des Injektors 12 und der Zündkerze 17 jeweils den gleichen Winkel mit der Ebene E2 beziehungsweise mit der Zylinderachse 5 einschließen und dabei schräg zu der Ebene E2 beziehungsweise schräg zu der Zylinderachse 5 verlaufen.

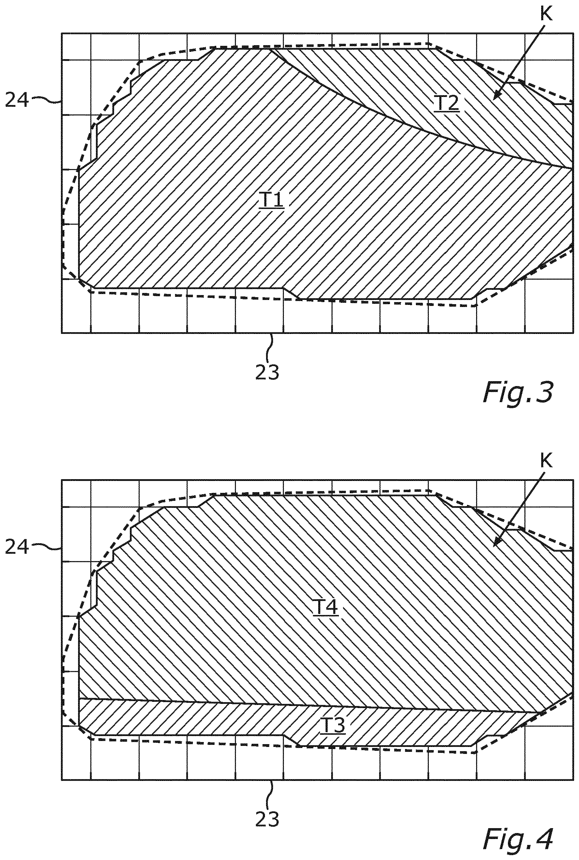

Fig. 3 zeigt ein Diagramm, auf dessen Abszisse 23 die Drehzahl der Verbrennungskraftmaschine 1 beziehungsweise deren Kurbelwelle aufgetragen ist. Auf der Ordinate 24 ist die Last der Verbrennungskraftmaschine 1 aufgetragen. In das in Fig. 3 gezeigte Diagramm ist ein beziehungsweise das auch als Motorkennfeld bezeichnete Kennfeld K der Verbrennungskraftmaschine 1 eingetragen. Das Kennfeld K weist wenigstens oder genau zwei Teilbereiche T1 und T2 auf, wobei sich der Teilbereich T2 hin zu höheren Drehzahlen und hin zu höheren Lasten, insbesondere direkt beziehungsweise unmittelbar, an den Teilbereich T1 anschließt. In dem Teilbereich T1 ist beispielsweise eine Doppelzündung vorgesehen. Unter der Doppelzündung ist zu verstehen, dass in dem Teilbereich T1 innerhalb des jeweiligen Arbeitsspiels der Verbrennungskraftmaschine 1 sowohl mittels der Zündkerze 17 als auch mittels der Zündkerze 18 jeweils zumindest ein Zündfunken erzeugt und somit eine Zündung bewirkt wird. Dabei wird beispielsweise zuerst mittels der Randzündkerze eine Zündung bewirkt, woraufhin mittels der Vorkammerzündkerze eine Zündung in der Vorkammer 14 bewirkt wird. In dem Teilbereich T2 ist eine Einfachzündung vorgesehen, sodass in dem Teilbereich T2 innerhalb des jeweiligen Arbeitsspiels eine Zündung mittels der Vorkammerzündkerze bewirkt wird, mithin mittels der ersten Zündkerze 17 in der Vorkammer 14 wenigstens ein Zündfunke erzeugt wird, und eine durch die Randzündkerze bewirkte Zündung, mithin ein durch die Randzündkerze bewirktes Erzeugen eines Zündfunkens, unterbleibt.

Fig. 4 zeigt das Kennfeld K mit weiteren Teilbereichen T3 und T4, wobei der Teilbereich T4 den Teilbereich T2 umfassen kann und/oder der Teilbereich T1 den Teilbereich T3 umfassen kann. In dem Teilbereich T3 ist eine Doppeleinspritzung vorgesehen. Dies bedeutet, dass innerhalb jeweiliger, zu dem Teilbereich T3 des Kennfelds K gehörender Arbeitsspiele der Verbrennungskraftmaschine 1 genau zwei zeitlich aufeinanderfolgende und voneinander beabstandete Einspritzungen mittels des Injektors 12 durchgeführt werden, wobei durch die jeweilige Einspritzung der Kraftstoff mittels des Injektors 12 in den Brennraum 4 direkt eingespritzt wird. Es ist erkennbar, dass sich der Teilbereich T4 hin zu höheren Lasten sowie gegebenenfalls hin zu höheren Drehzahlen unmittelbar beziehungsweise direkt an den Teilbereich T3 anschließt.

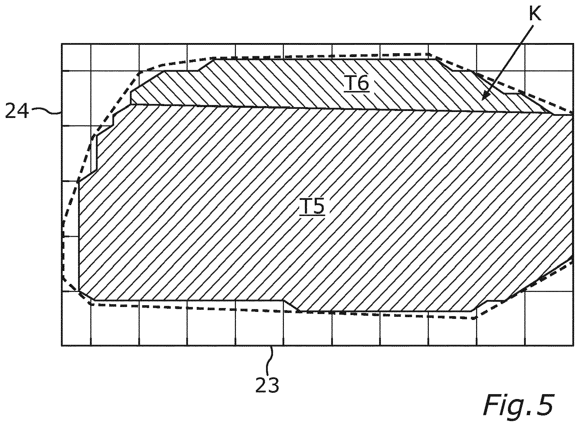

Schließlich zeigt Fig. 5 das Kennfeld K mit zwei weiteren Teilbereichen T5 und T6, wobei der Teilbereich T4 den Teilbereich T6 und/oder der Teilbereich T5 den Teilbereich T3 umfassen kann. Dabei ist in dem Teilbereich T6 eine Dreifacheinspritzung vorgesehen. Hierunter ist zu verstehen, dass innerhalb jeweiliger, zu dem Teilbereich T6 gehörende Arbeitsspiele der Verbrennungskraftmaschine 1 genau drei zeitlich aufeinanderfolgende und voneinander beabstandete Einspritzungen mittels des Injektors 12 durchgeführt werden, wobei durch die jeweilige Einspritzung der Kraftstoff mittels des Injektors 12 direkt in den Brennraum 4 eingespritzt wird. Ferner ist aus Fig. 5 erkennbar, dass sich der Teilbereich T6 hin zu höheren Lasten und/oder Drehzahlen unmittelbar beziehungsweise direkt am Teilbereich T5 anschließt.

### Bezugszeichenliste

- 1: Verbrennungskraftmaschine
- 2: Gehäuseelement
- 3: Zylinder
- 4: Brennraum
- 5: Zylinderachse
- 6: Brennraumdach
- 7a, b: Einlasskanal
- 8a, b: Einlassventil
- 9: Einlassseite
- 10: Auslassseite
- 11a, b: Auslasskanal
- 12: Injektor
- 13a, b: Auslassventil
- 14: Vorkammer
- 15: Durchgangsöffnungen
- 16: Kammerelement
- 17: erste Zündkerze
- 18: zweite Zündkerze
- 19: Pfeil
- 20: strichpunktierte Linie
- 21: strichpunktierte Linie
- 22: strichpunktierte Linie
- 23: Abszisse
- 24: Ordinate
- E1: Ebene
- E2: Ebene
- G: Gerade
- K: Kennfeld
- K1-5: Kraftstoffstrahl
- R: Randbereich
- S: Spitze
- T1-6: Teilbereich
- Z: Zündstelle

## Patentansprüche

1. Verbrennungskraftmaschine (1), mit wenigstens einem teilweise durch einen Zylinder (3) begrenzten Brennraum (4), mit einem dem Brennraum (4) zugeordneten Injektor (12), mittels welchem ein Kraftstoff direkt in den Brennraum (4) einspritzbar ist, wodurch in dem Brennraum (4) ein zumindest den direkt in den Brennraum (4) eingespritzten Kraftstoff und dem Brennraum (4) zugeführte Luft umfassendes Gemisch erzeugbar ist, mit einer Vorkammer (14), welche bis auf wenigstens eine Durchgangsöffnung (15) fluidisch von dem Brennraum (4) getrennt und über die wenigstens eine Durchgangsöffnung (15) fluidisch mit dem Brennraum (4) verbunden ist, aus welchem zumindest ein Teil des Gemisches über die wenigstens eine Durchgangsöffnung (15) in die Vorkammer (14) einleitbar ist, mit einer ersten Zündkerze (17), mittels welcher in der Vorkammer (14) wenigstens ein Zündfunke zum Zünden des über die wenigstens eine Durchgangsöffnung (15) in die Vorkammer (14) eingeleiteten Teils des Gemisches erzeugbar ist, und mit einer dem Brennraum (4) zugeordneten, zweiten Zündkerze (18), mittels welcher in dem Brennraum (4) und außerhalb der Vorkammer (14) wenigstens ein Zündfunke zum Zünden des in dem Brennraum (4) aufgenommenen Gemisches erzeugbar ist, wobei entlang einer in einer sich senkrecht zur axialen Richtung (5) des Zylinders (3) erstreckenden Ebene verlaufenden Richtung (19) die Vorkammer (14), der Injektor (12) und die zweite Zündkerze (18) in folgender Reihenfolge angeordnet sind: die Vorkammer (14) - der Injektor (12) - die zweite Zündkerze (18), **dadurch gekennzeichnet, dass**
die Vorkammer (14) gegenüber dem Injektor (12) zu einer Auslassseite (10) des Brennraums (4) hin versetzt angeordnet ist.

2. Verbrennungskraftmaschine (1) nach Anspruch 1,
**dadurch gekennzeichnet, dass**
eine parallel zu der Richtung (19) verlaufende oder mit der Richtung (19) zusammenfallende Gerade (G), welche in der Ebene verläuft, die Vorkammer (14), den Injektor (12) und die zweite Zündkerze (18) schneidet.

3. Verbrennungskraftmaschine (1) nach Anspruch 2,
**dadurch gekennzeichnet, dass**
die Gerade (G) durch die Mittelachse (5) des Zylinders (3) verläuft.

4. Verbrennungskraftmaschine (1) nach einem der vorhergehenden Ansprüche, **dadurch gekennzeichnet, dass**
die Vorkammer (14) zumindest teilweise zwischen auf der Auslassseite (10) angeordneten und dem Brennraum (4) zugeordneten Auslassventilen (13a, b) der Verbrennungskraftmaschine (1) angeordnet ist.

5. Verbrennungskraftmaschine (1) nach einem der vorhergehenden Ansprüche, **gekennzeichnet durch**
eine Zündstelle (Z), an welcher mittels der zweiten Zündkerze (18) der Zündfunke erzeugbar ist.

6. Verbrennungskraftmaschine (1) nach Anspruch 5,
**dadurch gekennzeichnet, dass**
die Zündstelle (Z) in einem Randbereich (R) des Brennraums (4) angeordnet ist.

7. Verbrennungskraftmaschine (1) nach Anspruch 5 oder 6,
**dadurch gekennzeichnet, dass**
die Zündstelle (Z) zwischen auf der Einlassseite (9) angeordneten und dem Brennraum (4) zugeordneten Einlassventilen (8a, b) der Verbrennungskraftmaschine (1) angeordnet ist.

8. Verbrennungskraftmaschine (1) nach einem der vorhergehenden Ansprüche, **dadurch gekennzeichnet, dass**
der Injektor (12) dazu ausgebildet ist, den Kraftstoff direkt in den Brennraum (4) unter Ausbildung von durch den Kraftstoff gebildeten Kraftstoffstrahlen (K1-5) derart einzuspritzen, dass die Kraftstoffstrahlen (K1-5), insbesondere deren jeweilige Mittellängsachsen, die Vorkammer (14) umgehen, wobei wenigstens oder genau einer der Kraftstoffstrahlen (K1-5) direkt auf die zweite Zündkerze (18), insbesondere deren Spitze (S), an welcher der Zündfunke mittels der zweiten Zündkerze (18) erzeugbar ist, trifft.

9. Verfahren zum Betreiben einer Verbrennungskraftmaschine (1) nach einem der vorhergehenden Ansprüche.

10. Verfahren nach Anspruch 9,
**dadurch gekennzeichnet, dass**
innerhalb wenigstens eines Arbeitsspiels der Verbrennungskraftmaschine (1) zuerst mittels der zweiten Zündkerze (18) wenigstens ein erster Zündfunke zum Zünden des Gemisches in dem Brennraum (4) erzeugt wird, woraufhin mittels der ersten Zündkerze (17) wenigstens ein zweiter Zündfunke in der Vorkammer (14) erzeugt wird, wobei innerhalb des Arbeitsspiels vor dem mittels der zweiten Zündkerze (18) bewirkten Erzeugen des ersten Zündfunkens und während des mittels der zweiten Zündkerze (18) bewirkten Erzeugens des ersten Zündfunkens ein durch die erste Zündkerze (17) bewirktes Erzeugen eines Zündfunkens unterbleibt.

11. Verfahren nach Anspruch 9 oder 10,
**dadurch gekennzeichnet, dass**
in wenigstens einem ersten Teilbereich (T1) eines Kennfelds (K) der Verbrennungskraftmaschine (1) innerhalb jeweiliger Arbeitsspiele der Verbrennungskraftmaschine (1) sowohl mittels der ersten Zündkerze (17) als auch mittels der zweiten Zündkerze (18) jeweilige Zündfunken erzeugt werden, wobei in wenigstens einem zweiten Teilbereich (T2) des Kennfelds (K), dessen zweiter Teilbereich (T2) höhere Lasten und höhere Drehzahlen als der erste Teilbereich (T1) umfasst, innerhalb jeweiliger Arbeitsspiele der Verbrennungskraftmaschine (1) bezogen auf die Zündkerzen (17, 18) ausschließlich mittels der ersten Zündkerze (17) jeweilige Zündfunken erzeugt werden.

12. Verfahren nach einem der Ansprüche 9 bis 11,
**dadurch gekennzeichnet, dass**
Zündzeitpunkte, zu welchen mittels der zweiten Zündkerze (18) jeweilige Zündfunken erzeugt werden, unabhängig von Zündzeitpunkten, zu welchen mittels der ersten Zündkerze (17) jeweilige Zündfunken erzeugt werden, mittels einer elektronischen Recheneinrichtung der Verbrennungskraftmaschine (1) eingestellt werden.

13. Verfahren nach einem der Ansprüche 9 bis 12,
**dadurch gekennzeichnet, dass**
Zündzeitpunkte, zu welchen mittels der zweiten Zündkerze (18) jeweilige Zündfunken erzeugt werden, mittels einer elektronische Recheneinrichtung auf Basis eines ersten Kennfelds eingestellt werden, welches unabhängig von einem zweiten Kennfeld ist, auf dessen Basis Zündzeitpunkte, zu welchen mittels der ersten Zündkerze (17) jeweilige Zündfunken erzeugt werden, mittels der elektronischen Recheneinrichtung eingestellt werden.

14. Verfahren nach einem der Ansprüche 9 bis 13,
**dadurch gekennzeichnet, dass**
Zündzeitpunkte, zu welchen mittels der zweiten Zündkerze (18) jeweilige Zündfunken erzeugt werden, mittels einer elektronischen Recheneinrichtung in Abhängigkeit von einer Last, einer Temperatur und einer Drehzahl der Verbrennungskraftmaschine (1) eingestellt werden.

## Claims

1. Internal combustion engine (1), having at least one combustion chamber (4) which is partially delimited by a cylinder (3), having an injector (12) which is assigned to the combustion chamber (4) and by means of which a fuel can be injected directly into the combustion chamber (4), as a result of which a mixture comprising at least the fuel injected directly into the combustion chamber (4) and air supplied to the combustion chamber (4) can be generated in the combustion chamber (4), having a pre-chamber (14) which is fluidically separated from the combustion chamber (4) except for at least one passage opening (15) and is fluidically connected via the at least one passage opening (15) to the combustion chamber (4), from which at least a part of the mixture can be introduced via the at least one passage opening (15) into the pre-chamber (14), having a first spark plug (17), by means of which at least one ignition spark for igniting that part of the mixture which is introduced via the at least one passage opening (15) into the pre-chamber (14) can be generated in the pre-chamber (14), and having a second spark plug (18) which is assigned to the combustion chamber (4) and by means of which at least one ignition spark for igniting the mixture received in the combustion chamber (4) can be generated in the combustion chamber (4) and outside the pre-chamber (14), wherein the pre-chamber (14), the injector (12) and the second spark plug (18) are arranged along a direction (19) running in a plane extending perpendicular to the axial direction (5) of the cylinder (3), in the following sequence: the pre-chamber (14) - the injector (12) - the second spark plug (18),
**characterized in that**
the pre-chamber (14) is offset from the injector (12) towards an exhaust side (10) of the combustion chamber (4) .

2. Internal combustion engine (1) according to Claim 1,
**characterized in that**
a straight line (G) which runs parallel to the direction (19) or coincides with the direction (19) and runs in the plane intersects the pre-chamber (14), the injector (12) and the second spark plug (18).

3. Internal combustion engine (1) according to Claim 2,
**characterized in that**
the straight line (G) runs through the central axis (5) of the cylinder (3).

4. Internal combustion engine (1) according to one of the preceding claims,
**characterized in that**
the pre-chamber (14) is arranged at least partially between exhaust valves (13a, b) of the internal combustion engine (1) arranged on the exhaust side (10) and assigned to the combustion chamber (4).

5. Internal combustion engine (1) according to one of the preceding claims,
**characterized by**
an ignition point (Z) at which the ignition spark can be generated by means of the second spark plug (18).

6. Internal combustion engine (1) according to Claim 5,
**characterized in that**
the ignition point (Z) is arranged in an edge region (R) of the combustion chamber (4).

7. Internal combustion engine (1) according to Claim 5 or 6,
**characterized in that**
the ignition point (Z) is arranged between intake valves (8a, b) of the internal combustion engine (1) arranged on the intake side (9) and assigned to the combustion chamber (4).

8. Internal combustion engine (1) according to one of the preceding claims,
**characterized in that**
the injector (12) is designed to inject the fuel directly into the combustion chamber (4), forming fuel jets (K1-5) formed by the fuel, in such a way that the fuel jets (K1-5), in particular their respective central longitudinal axes, bypass the pre-chamber (14), wherein at least or precisely one of the fuel jets (K1-5) strikes directly against the second spark plug (18), in particular the tip (S) thereof, at which the ignition spark can be generated by means of the second spark plug (18) .

9. Method for operating an internal combustion engine (1) according to one of the preceding claims.

10. Method according to Claim 9,
**characterized in that**
within at least one working cycle of the internal combustion engine (1), at least one first ignition spark for igniting the mixture in the combustion chamber (4) is first of all generated by means of the second spark plug (18), whereupon at least one second ignition spark is generated in the pre-chamber (14) by means of the first spark plug (17), wherein within the working cycle prior to the generation of the first ignition spark brought about by means of the second spark plug (18) and during the generation of the first ignition spark brought about by means of the second spark plug (18), generation of an ignition spark brought about by the first spark plug (17) is omitted.

11. Method according to Claim 9 or 10,
**characterized in that**
in at least one first partial region (T1) of a characteristic diagram (K) of the internal combustion engine (1), respective ignition sparks are generated within respective working cycles of the internal combustion engine (1), both by means of the first spark plug (17) and by means of the second spark plug (18), wherein in at least one second partial region (T2) of the characteristic diagram (K), the second partial region (T2) of which comprises higher loads and higher rotational speeds than the first partial region (T1), respective ignition sparks are generated within respective working cycles of the internal combustion engine (1) with reference to the spark plugs (17, 18) exclusively by means of the first spark plug (17).

12. Method according to one of Claims 9 to 11,
**characterized in that**
ignition times, at which respective ignition sparks are generated by means of the second spark plug (18), are set by means of an electronic computer device of the internal combustion engine (1) independently of ignition times, at which respective ignition sparks are generated by means of the first spark plug (17).

13. Method according to one of Claims 9 to 12,
**characterized in that**
ignition times, at which respective ignition sparks are generated by means of the second spark plug (18), are set by means of an electronic computer device on the basis of a first characteristic diagram, which is independent of a second characteristic diagram, on the basis of which ignition times, at which respective ignition sparks are generated by means of the first spark plug (17), are set by means of the electronic computer device.

14. Method according to one of Claims 9 to 13,
**characterized in that**
ignition times, at which respective ignition sparks are generated by means of the second spark plug (18), are set by means of an electronic computer device depending on a load, a temperature and a rotational speed of the internal combustion engine (1).

## Revendications

1. Moteur à combustion interne (1), comprenant au moins une chambre de combustion (4) délimitée partiellement par un cylindre (3), comprenant un injecteur (12) associé à la chambre de combustion (4) au moyen duquel un carburant peut être injecté directement dans la chambre de combustion (4) ce qui permet de générer dans la chambre de combustion (4) un mélange comprenant au moins le carburant injecté directement dans la chambre de combustion (4) et de l'air amené à la chambre de combustion (4), comprenant une préchambre (14) qui est séparée fluidiquement de la chambre de combustion (4) à l'exception d'au moins une ouverture de passage (15) et qui est reliée fluidiquement par l'intermédiaire de ladite au moins une ouverture de passage (15) à la chambre de combustion (4) à partir de laquelle au moins une partie du mélange peut être introduite dans la préchambre (14) par l'intermédiaire de ladite au moins une ouverture de passage (15), comprenant au moins une première bougie d'allumage (17) au moyen de laquelle au moins une étincelle d'allumage peut être générée dans la préchambre (14) pour allumer la partie du mélange introduite dans la préchambre (14) par l'intermédiaire de ladite au moins une ouverture de passage (15), et comprenant une deuxième bougie d'allumage (18) associée à la chambre de combustion (4) au moyen de laquelle au moins une étincelle d'allumage peut être générée dans la chambre de combustion (4) et à l'extérieur de la préchambre (14) pour allumer le mélange reçu dans la chambre de combustion (4), dans lequel, dans une direction (19) passant dans un plan s'étendant perpendiculairement à la direction axiale (5) du cylindre (3), la préchambre (14), l'injecteur (12) et la deuxième bougie d'allumage (18) sont disposés dans l'ordre suivant : la préchambre (14) - l'injecteur (12) - la deuxième bougie d'allumage (18), **caractérisé en ce que**
la préchambre (14) est disposée de manière décalée par rapport à l'injecteur (12) vers un côté sortie (10) de la chambre de combustion (4).

2. Moteur à combustion interne (1) selon la revendication 1,
**caractérisé en ce que**
une droite (G) s'étendant en parallèle à la direction (19) ou coïncidant avec la direction (19), qui s'étend dans le plan et qui intersecte la préchambre (14), l'injecteur (12) et la deuxième bougie d'allumage (18).

3. Moteur à combustion interne (1) selon la revendication 2,
**caractérisé en ce que**
la droite (G) s'étend par l'axe central (5) du cylindre (3) .

4. Moteur à combustion interne (1) selon l'une quelconque des revendications précédentes,
**caractérisé en ce que**
la préchambre (14) est disposée au moins en partie entre des soupapes de sortie (13a, b) du moteur à combustion interne (1), disposées du côté sortie (10) et associées à la chambre de combustion (4).

5. Moteur à combustion interne (1) selon l'une quelconque des revendications précédentes,
**caractérisé par**
un point d'allumage (Z) où l'étincelle d'allumage peut être générée au moyen de la deuxième bougie d'allumage (18) .

6. Moteur à combustion interne (1) selon la revendication 5,
**caractérisé en ce que**
le point d'allumage (Z) est disposé dans une zone marginale (R) de la chambre de combustion (4).

7. Moteur à combustion interne (1) selon la revendication 5 ou 6,
**caractérisé en ce que**
le point d'allumage (Z) est disposé entre des soupapes d'entrée (8a, b) du moteur à combustion interne (1), disposées du côté entrée (9) et associées à la chambre de combustion (4).

8. Moteur à combustion interne (1) selon l'une quelconque des revendications précédentes,
**caractérisé en ce que**
l'injecteur (12) est réalisé pour injecter le carburant directement dans la chambre de combustion (4) en réalisant des jets de carburant (K1-5) formés par le carburant de telle sorte que les jets de carburant (K1-5) contournent la préchambre (14) en particulier les axes longitudinaux centraux de celle-ci, dans lequel au moins ou exactement l'un des jets de carburant (K1-5) est directement incident sur la deuxième bougie d'allumage (18), en particulier sa pointe (S), où l'étincelle d'allumage peut être générée au moyen de la deuxième bougie d'allumage (18).

9. Procédé permettant de faire fonctionner un moteur à combustion interne (1) selon l'une quelconque des revendications précédentes.

10. Procédé selon la revendication 9,
**caractérisé en ce que**
dans au moins un cycle de fonctionnement du moteur à combustion interne (1), d'abord au moins une première étincelle d'allumage est générée au moyen de la deuxième bougie d'allumage (18) pour allumer le mélange dans la chambre de combustion (4), après quoi au moins une deuxième étincelle d'allumage est générée dans la préchambre (14) au moyen de la première bougie d'allumage (17), dans lequel, dans le cycle de fonctionnement, avant la génération de la première étincelle d'allumage provoquée au moyen de la deuxième bougie d'allumage (18) et pendant la génération de la première étincelle d'allumage provoquée par la deuxième bougie d'allumage (18), une génération d'une étincelle d'allumage provoquée par la première bougie d'allumage (17) est omise.

11. Procédé selon la revendication 9 ou 10,
**caractérisé en ce que**
dans au moins une première zone partielle (T1) d'un diagramme caractéristique (K) du moteur à combustion interne (1), dans des cycles de fonctionnement respectifs du moteur à combustion interne (1), des étincelles d'allumage respectives sont générées à la fois au moyen de la première bougie d'allumage (17) et au moyen de la deuxième bougie d'allumage (18), dans lequel dans au moins une deuxième zone partielle (T2) du diagramme caractéristique (K) dont la deuxième zone partielle (T2) comprend des charges plus élevées et des vitesses de rotation plus élevées que la première zone partielle (T1), dans des cycles de fonctionnement respectifs du moteur à combustion interne (1), concernant les bougies d'allumage (17, 18), des étincelles d'allumage respectives sont générées exclusivement au moyen de la première bougie d'allumage (17).

12. Procédé selon l'une quelconque des revendications 9 à 11,
**caractérisé en ce que**
des instants d'allumage auxquels des étincelles d'allumage respectives sont générées au moyen de la deuxième bougie d'allumage (18) sont réglés au moyen d'un dispositif de calcul électronique du moteur à combustion interne (1) indépendamment des instants d'allumage auxquels des étincelles d'allumage respectives sont générées au moyen de la première bougie d'allumage (17).

13. Procédé selon l'une quelconque des revendications 9 à 12,
**caractérisé en ce que**
des instants d'allumage auxquels des étincelles d'allumage respectives sont générées au moyen de la deuxième bougie d'allumage (18), sont réglés au moyen d'un dispositif de calcul électronique sur la base d'un premier diagramme caractéristique qui est indépendant d'un deuxième diagramme caractéristique sur la base duquel des instants d'allumage auxquels des étincelles d'allumage respectives sont générées au moyen de la première bougie d'allumage (17) sont réglés au moyen du dispositif de calcul électronique.

14. Procédé selon l'une quelconque des revendications 9 à 13,
**caractérisé en ce que**
des instants d'allumage auxquels des étincelles d'allumage respectives sont générées au moyen de la deuxième bougie d'allumage (18) sont réglés au moyen d'un dispositif de calcul électronique en fonction d'une charge, d'une température et d'une vitesse de rotation du moteur à combustion interne (1).
